# EUROPÄISCHE PATENTANMELDUNG

(11) **EP 1 553 065 A2**
(43) Veröffentlichungstag der Anmeldung: **13.07.2005**
(21) Anmeldenummer: 04450241.7
(22) Anmeldetag: 29.12.2004
(51) Int. Cl.: C04B 28/02, C04B 38/02

(54) **Frischbeton, Festbeton und Verfahren zur Herstellung derselben sowie Verwendung des Festbetons**

(30) Priorität: 07.01.2004 AT 132004
(71) Anmelder: Schotter- und Betonwerk Karl SCHWARZL Betriebsgesellschaft m.b.H., 8141 Unterpremstätten (AT)
(72) Erfinder: Haberland, Christof, Dipl.-Ing., 2371 Hinterbrühl (AT)
(74) Vertreter: Widtmann, Georg

(57) **Zusammenfassung**

Frischbeton mit Gasporen mit über 0,5 Vol.-‰ bis 2,5 % thermisch bis 250°C, insbesondere bis 200°C, umwandelbaren Fasern, 9,0 Vol.-% bis 15,0 Vol.-% Bindemitteln, z. B. Portlandzement, Flugasche, 15,0 Vol.-% bis 22,0 Vol.-% Wasser, 60,0 Vol.-% bis 75,0 Vol.-% Zuschlagsstoffen, z. B. Schotter, Kies, Leichtzuschlagsstoffe, Rest Zusatzstoffe, Zusatzmittel od. dgl., wobei die Summe von Gasporen, insbesondere Luftporen, unter Ausschluss der Gasporen der Zuschlagsstoffe von 5,0 Vol.-% bis 10,0 Vol.-%, beträgt. Dieser Frischbeton kann in einem Fahrmischer mit Trommel bis zu dem erwünschten Gehalt an Luftporen gemischt werden.

## Beschreibung

Die Erfindung bezieht sich auf Frischbeton, Festbeton und ein Verfahren zur Herstellung derselben, wobei der Frischbeton Gasporen und zumindest 0,5 Vol.-‰ unterhalb von 250°C thermisch umwandelbare Fasern aufweist sowie die Verwendung eines derartigen Festbetons für hitzebeständige Bauteile.

Baustoffe, wie Beton oder auch Stahl, weisen eine besondere Empfindlichkeit gegenüber höheren Temperaturen auf. Bei Stahl ist es insbesondere dadurch gegeben, dass relativ kurze Temperaturbereiche vorliegen, in welchen die Festigkeit abnimmt, da eine besonders hohe Wärmeleitfähigkeit gegeben ist. Bei anderen Baustoffen, wie beispielsweise Ziegeln, Beton od. dgl., liegt eine wesentlich geringere Wärmeleitfähigkeit vor, so dass die Außentemperatur, beispielsweise durch Brand, nicht so schnell wirksam werden kann.

Um die thermische Beständigkeit von Stahlkonstruktionen zu erhöhen, ist es bekannt, dieselben mit einer Schichte zu versehen, die eine besonders geringe Wärmeleitfähigkeit aufweist, so dass die Einleitung höherer Temperaturen verzögert werden kann.

Beton stellt einen inhomogenen Körper dar, welcher bei Beaufschlagung mit höheren Temperaturen mit individuellen Zerstörungspotentialen versehen ist. Neben den mit Volumsveränderungen versehenen Phasenumwandlungen, beispielsweise von Quarz, ist für die thermische Destruktion von Beton das Entweichen von chemisch oder physikalisch gebundenem Wasser von besonderer Bedeutung. Wasser, das ohne Berücksichtigung des Luftdruckes sich in etwa bei 100°C in Dampf umwandelt, kann zu hohen Druckspannungen innerhalb des Betons führen. Wenn dieser Wasserdampf nicht entweichen kann, so werden Abplatzungen des Festbetons bewirkt, womit die Festigkeit der gesamten Baukonstruktion aber auch insbesondere der Bewehrung, die dann einer thermischen Beaufschlagung besonders stark unterworfen wird, verringert ist. Wasserdampf kann einerseits durch Diffusion über die festen Wandungen des Betons abgegeben werden, wobei ein besonders hoher Zeitfaktor vorliegt. Eine weitere Möglichkeit besteht darin, dass der Wasserdampf über offene Gasporen, in der Regel Luftporen, oder auch Poren, die durch Fasern entstehen, die thermisch umwandelbar, z. B. durch Phasenwandel von fest auf flüssig oder fest auf gasförmig, also sublimierbar aber auch oxidierbar od. dgl., sind, entweichen kann. Durch diese Poren kann sodann der den Überdruck verursachende Wasserdampf, ohne Schaden zu verursachen, entweichen.

Obwohl die Hitzebeständigkeit von Betonkonstruktionen seit längerer Zeit von hoher Bedeutung ist, sind bislang keine internationalen verbindlichen Normen für die Hitzebeständigkeit erstellt worden, und die Entwicklungen gehen in unterschiedliche Richtungen. So wird einerseits versucht, hitzebeständige Zemente zur Anwendung zu bringen und andererseits die Hitzebeständigkeit von einem Beton durch die Zuschlagsstoffe, die eine geringere Wärmeleitfähigkeit aufweisen als auch keiner Phasenumwandlung unterliegen, zu erreichen.

Der vorliegenden Erfindung ist zur Aufgabe gestellt, einen Frischbeton und daraus entstehenden Festbeton und auch ein entsprechendes Verfahren zur Herstellung des Frischbetons zu schaffen, der in seiner Porosität im Brandverhalten die Ableitung von Gasen, insbesondere gasförmigem Wasser, erlaubt, so dass die Spannungen innerhalb des Festbetons keine Zerstörung desselben bewirken, wobei weiters die Wärmeleitfähigkeit des Festbetons unter Berücksichtigung der Gasporen so weit herabgesetzt werden kann, dass auch die thermische Beaufschlagung der Bewehrung wesentlich verzögert werden kann. Weiters soll eine Karbonatisierung des Betons und eine Korrosion einer Bewehrung besonders gering gehalten werden.

Der erfindungsgemäße Frischbeton mit Gasporen mit zumindest 0,5 Vol.-‰ thermisch bis 250°C, insbesondere bis 200°C, umwandelbaren Fasern, 9,0 Vol.-% bis 15,0 Vol.-% Bindemitteln, z. B. Portlandzement, Flugasche, 15,0 Vol.-% bis 22,0 Vol.-% Wasser, 60,0 Vol.-% bis 75,0 Vol.-% Zuschlagsstoffen, z. B. Schotter, Kies, Leichtzuschlagsstoffe, Rest Zusatzstoffe, Zusatzmittel od. dgl., besteht im Wesentlichen darin, dass die Summe der Gasporen, insbesondere Luftporen, unter Ausschluss der Gasporen der Zuschlagsstoffe von 5,0 Vol.-% bis 10,0 Vol.-%, beträgt und die Fasern einen Anteil von über 0,5 Vol.- ‰ bis 2,5 Vol.-%, insbesondere 0,9 Vol.- ‰ bis 0,5 Vol.-%, aus einem Kunststoff, insbesondere thermoplastischen Kunststoff, Polyester, einem Polyolefin, Polyethylen, Polypropylen, aufweisen. Betonzusammensetzungen sind technologische Rezepturen, wobei unterschiedliche Dimensionen zum Einsatz kommen, beispielsweise kg/m³ oder das Gewichtsverhältnis von Bindemittel zu Wasser. Damit kann aber nicht zum Ausdruck gebracht werden, wie groß der Anteil von Gasporen, insbesondere Luftporen, im Beton sein muss. Eine offenporige Struktur ist in der Regel für Beton, welcher einer Bewitterung ausgesetzt wird, unerwünscht, da einerseits die Wasseraufnahmefähigkeit dadurch wesentlich erhöht wird und bei Frosteinwirkung durch die Volumszunahme von Wasser bei dem Übergang von flüssigem in festem Aggregatzustand eine Zerstörung des Betons auftreten kann. Für einen Beton, der besonders temperaturbeständig ist, also beispielsweise in Tunnels aber auch Hochbauten, ist sowohl die Herabsetzung der Wärmeleitfähigkeit als auch die Möglichkeit, dass Wasser, sei es chemisch oder physikalisch gebunden, entweichen kann, damit keine Abplatzungen eintreten, von besonderer Bedeutung. Unter Berücksichtigung der erforderlichen Druckfestigkeiten, wie sie für Konstruktionsbeton erforderlich sind, also mit einer Festigkeit von 25 N/mm² bis 105 N/mm² hat sich gezeigt, dass ein Optimum zwischen Festigkeit und Hitzebeständigkeit dann vorliegt, wenn die Summe von Gasporen unter Ausschluss der Gasporen der Zuschlagsstoffe und gegebenenfalls Fasern zwischen 5,0 Vol.-% und 10,0 Vol.-% beträgt. Die Fasern können auch Hohlfasern sein.

Sind die Fasern mit einem Anteil von über 0,5 Vol.- ‰ bis 2,5 Vol.-%, insbesondere 0,9 Vol.- ‰ bis 0,5 Vol.-%, vorgesehen und mit einem Kunststoff, insbesondere thermoplastischen Kunststoff, z. B. Polyester, einem Polyolefin, Polyethylen, Polypropylen, aufgebaut, so besteht die Möglichkeit, dass die Poren bereits bei niedrigeren Temperaturen freigegeben werden, wobei kein exakter Schmelzpunkt der Kunststoffe erforderlich ist, sondern ein weiter Bereich der Erweichung des Kunststoffes vorliegen kann, so dass bei Überdruck innerhalb des Betons, z. B. durch Wasserdampf, der erweichte Kunststoff aus den Poren herausgedrückt wird.

Weisen die Fasern einen Maximaldurchmesser von 5,0 µm bis 40,0 µm auf, so wird dadurch einerseits die Struktur des Betons und damit seine Festigkeit im Wesentlichen nicht nachteilig beeinflusst, aber die Möglichkeit zur Entweichung des den Überdruck bildenden Gases ist voll gewährleistet.

Ein besonders gutes System zur Gasabgabe besteht darin, dass die Länge der Fasern zwischen dem Hundertfachen bis Tausendfachen des maximalen Durchmessers der Fasern beträgt, da einerseits ein Verbundsystem damit aufgebaut werden kann und andererseits die Festigkeitsstruktur noch nicht negativ beaufschlagt ist.

Der erfindungsgemäße Festbeton mit zumindest 0,5 Vol.- ‰ thermisch bis 250°C, insbesondere bis 200°C, umwandelbaren Fasern, 13,0 Vol.-% bis 19,0 Vol.-% verfestigtem Bindemittel, z. B. Portlandzement, Flugasche, 60,0 Vol.-% bis 75,0 Vol.-% Zuschlagsstoffen, z. B. Schotter, Kies, Leichtzuschlagsstoffe, Rest Zusatzstoffe, Zusatzmittel od. dgl., mit Gasporen, besteht im Wesentlichen darin, dass die Summe von offenen Gasporen, unter Ausschluss der Gasporen der Zuschlagsstoffe und Fasern von 5,0 Vol.-% bis 10,0 Vol.-% beträgt, und die Fasern einen Anteil von über 0,5 Vol.- ‰ bis 2,5 Vol.-%, insbesondere 0,9 Vol.- ‰ bis 0,5 Vol.-%, aus einem Kunststoff, insbesondere thermoplastischen Kunststoff, Polyester, einem Polyolefin, Polyethylen, Polypropylen, aufweisen.

Betragen die Gasporen unter Ausschluss der Gasporen der Zuschlagsstoffe von 5,0 Vol.-% bis 10,0 Vol.-%, so besteht bereits bei geringen Temperaturen die Möglichkeit, dass gasförmige Produkte, wie beispielsweise Wasserdampf, entweichen können, und andererseits die Aufnahme von Wärme für die thermische Umsetzung, wie beispielsweise Schmelzen oder auch Karbonisieren der Fasern, nicht erforderlich ist. Weiters kann die Karbonatisierung und auch die Korrosion der Bewehrung besonders gering gehalten werden.

Beträgt der Anteil der Fasern über 0,5 Vol.- ‰ bis 2,5 Vol.-%, insbesondere 0,9 Vol.- ‰ bis 0,5 Vol.-%, aus einem Kunststoff, insbesondere einem thermoplastischen Kunststoff, Polyester, einem Polyolefin, Polyethylen, Polypropylen, so besteht die Möglichkeit, dass zusätzliche Poren bereits bei niedrigen Temperaturen freigegeben werden, wobei kein exakter Schmelzpunkt der Kunststoffe vorliegen muss, sondern ein weiter Bereich der Erweichung desselben vorliegen kann, so dass bei Überdruck innerhalb des Betons, z. B. durch Wasserdampf, der erweichte Kunststoff aus den Poren herausgedrückt werden kann.

Weisen die Fasern einen maximalen Durchmesser von 5,0 µm bis 40,0 µm auf, so wird dadurch die Struktur des Betons und damit seine Festigkeit im Wesentlich nicht nachteilig beeinflusst. Auch die Möglichkeit zur Entweichung des den Überdruck bildenden Gases ist voll gewährleistet.

Beträgt die Länge der Fasern zwischen dem Hundertfachen bis Tausendfachen des maximalen Durchmessers, so kann mit diesen ein Verbundsystem aufgebaut werden, über das die Gase entweichen können, und weiters ist die Festigkeitsstruktur noch nicht negativ beaufschlagt.

Das erfindungsgemäße Verfahren zur Herstellung eines Frischbetons, wobei eine Mischung mit 9,0 Vol.-% bis 15,0 Vol.-% Bindemitteln, z. B. Portlandzement, Flugasche, 15,0 Vol.-% bis 22,0 Vol.-% Wasser, 60,0 Vol.-% bis 75,0 Vol.-% Zuschlagsstoffen, z. B. Schotter, Kies, Leichtzuschlagsstoffe, und Zusatzstoffen, Zusatzmitteln od. dgl., in einem Fahrmischer mit drehbarer Trommel, z. B. fahrbarem Umkehr-, Gleichlauf-, Freifallmischer, gemischt werden, besteht im Wesentlichen darin, dass die Summe der Gasporen, insbesondere Luftporen, unter Ausschluss der Gasporen der Zuschlagsstoffe von 5,0 Vol.-% bis 10,0 Vol.-%, beträgt und die Fasern einen Anteil von über 0,5 Vol.- ‰ bis 2,5 Vol.-%, insbesondere 0,9 Vol.- %o bis 0,5 Vol.-%, aus einem Kunststoff, insbesondere thermoplastischen Kunststoff, Polyester, einem Polyolefin, Polyethylen, Polypropylen, aufweisen. Das Mischen eines Frischbetons in einem Fahrmischer ist durchaus für Spritzbeton bekannt, da dort eine besonders niedrige Viskosität erwünscht ist, um eine entsprechende leichtere Verarbeitbarkeit zu erreichen. Bei einem Beton, welcher als Hochleistungsbeton eingesetzt werden soll, also keine Entmischungen aufweisen darf, bestand bisher ein Vorurteil, das Mischen lediglich in einem Fahrmischer, also einem fahrbaren Mischer, der entweder ein Umkehrmischer, ein Gleichlaufmischer oder ein Freifallmischer ist, durchzuführen. Die Mischvorgänge haben bislang dazu geführt, dass der erhaltene Frischbeton, z. B. eine zu niedrige Viskosität hatte, und es zum Absetzen der Frischbetonmischung kann. Wird jedoch der Gasporengehalt, insbesondere der Luftporengehalt, berücksichtigt, dann kann ein Absetzen des Frischbetons vermieden werden.

Wird nach einer vorbestimmten Anzahl von Umdrehungen der Trommel der Mischvorgang beendet, so kann sichergestellt werden, dass keine zu geringe bzw. zu hohe Durchmischung des Frischbetons erfolgt. Es wurde festgestellt, dass bei Vorliegen von Fasern, insbesondere Kunststofffasern, selbst bei einer geringeren Zugabe von Luftporenbildnern sich wesentlich früher ein hoher Gehalt an Gasporen einstellen kann.

Wird der Gasporengehalt der Mischung mit der Anzahl der Drehungen der drehbaren Trommel vorab bestimmt und erfolgt das Mischen von einzelnen Frischbetonmengen unter gleichen Bedingungen, so kann ein besonders gleichförmiger Beton erhalten werden.

Der erfindungsgemäße Festbeton eignet sich besonders für hitzebeständige Bauteile, insbesondere für Auskleidungen von Tunnel.

Die Fasern können, wie in den Patentansprüchen angegeben, unterschiedliche Durchmesser als auch Längen aufweisen, wobei Fasern aus Polyethylen und Polypropylen aufgrund ihrer niedrigeren Erweichungspunkte bevorzugt sind, jedoch besteht auch die Möglichkeit, Fasern aus Polyester, die je nach ihrer chemischen Zusammensetzung unterschiedliche Erweichungspunkte aufweisen können, zum Einsatz kommen. Auch andere Fasern, die durch thermische Einwirkung zersetzt werden können, wie beispielsweise Fasern, die Bestandteile aufweisen, welche bei erhöhter Temperatur höhere Gasmengen abgeben, sind von besonderer Bedeutung.

Bindemittel für Beton sind insbesondere hydraulische aber auch latenthydraulische Bindemittel.

Im Folgenden wird die Erfindung anhand der Beispiele näher erläutert.

### Vergleichsbeispiel 1:

Es wurde ein Frischbeton mit 9,0 Vol.-% Portlandzement (CEM I 32,5 R - HS C3Afrei) der Firma Lafarge Perlmoser AG, 2,0 Vol.-% Kraftwerksflugasche Heizkraftwerk Mellach, 0,3 Vol.-% Betonverflüssiger der Firma Betontechnik Ges.m.b.H., die Wasserzugabe erfolgte bis zu einem Gesamtwassergehalt von 18,0 Vol.-%, erstellt. Der Rest Flussschotter wies folgende Korngrößenverteilung auf:

| | |
|---|---|
| 0 mm bis 4 mm | 31,3 Vol.-% |
| 4 mm bis 16 mm | 24,3 Vol.-% |
| 16 mm bis 32 mm | 14,0 Vol.-%. |

Das Mischen erfolgte in einem Tellermischer für 10 Minuten. Der Luftporengehalt betrug 1,0 Vol.-%. Das Ausbreitmaß, bestimmt nach ÖNORM B3303, betrug nach 30 Minuten 52,0 cm. Es traten leichte Entmischungserscheinungen auf.

Aus diesem Frischbeton wurden 26 Probekörper, u. zw. Würfel mit einer Kantenlänge 15 x 15 x 15 cm, gefertigt. Die Druckfestigkeit wurde jeweils an drei Prüfkörpern nach 7 Tagen jeweils im arithmetischen Mittel mit 23,0 N/mm² und nach 28 Tagen im arithmetischen Mittel mit 33,4 N/mm² bestimmt. Nach 28 Tagen Lagerung bei 20°C und 65 % relativer Luftfeuchtigkeit wurden die Würfel in einem mit Erdgas und Sauerstoff befeuerten Ofen jeweils 3 Stunden bei 800°C, 1000°C, 1100°C und 1200°C gelagert und danach der Gewichtsverlust und das Aussehen im noch heißen Zustand ermittelt. Weiters wurde von den Proben, die auf 1200°C erhitzt wurden, der Gewichtsverlust und das Aussehen unmittelbar nach Abkühlung auf Raumtemperatur und nach 24 Stunden ermittelt. Die Druckfestigkeit lag unmittelbar nach der Abkühlung bei rund 5 N/mm² und war nach 24 Stunden als Folge des fortgeschrittenen Zerfalles der Probewürfel nicht mehr messbar.

| Temperatur °C | Gewichtsverlust Gew-% | Aussehen |
|---|---|---|
| 800 | 7,5 | Abplatzungen |
| 1000 | 11,2 | Risse |
| 1100 | 16,4 | Starke Risse |
| 1200 | 16,2 | Starke Risse |
| Unmittelbar nach Abkühlung von 1200°C | 19,4 | Starke Risse |
| Nach 24 Stunden | 22,2 | CaO-Zerfall erkennbar |

Im Folgenden wird der Temperaturverlauf in der Probe gegen die Zeit in einer Tabelle dargestellt. Die Proben wurden am oberen Ende einer Brennkammer dermaßen angeordnet, dass die Proben einen Teil der Ofenraum-Decke bildeten, wobei die Temperatur am heißen Ende nach 5 Minuten 1000°C, nach 10 Minuten 1100°C und nach 20 Minuten 1200°C betragen hat. Diese Temperaturen wurden sodann konstant gehalten. Die Temperatur wurde über Thermoelemente bestimmt, die im Frischbeton der Würfel in 30 mm, 50 mm und 100 mm positioniert wurden. Die Messergebnisse sind das arithmetische Mittel von drei Messungen, gemittelt auch nach dem Ort der Proben.

| In Minuten | Temperatur in °C | | |
|---|---|---|---|
| | 30 mm | 50 mm | 100 mm |
| 30 | 270 | 150 | 100 |
| 60 | 430 | 270 | 100 |
| 120 | 620 | 480 | 170 |

### Beispiel 2:

Es wurde ein Frischbeton mit 0,18 Vol.-% Polypropylenfasern mit einem mittleren Durchmesser von 16,0 µm und durchschnittlicher Länge von 6,0 mm, 8,6 Vol.-% Portlandzement (CEM I 32,5 R - HS C3Afrei) der Firma Lafarge Perlmoser AG, 1,9 Vol.-% Kraftwerksflugasche Heizkraftwerk Mellach, 0,2 Vol.-% Betonverflüssiger der Firma Betontechnik Ges.m.b.H., die Wasserzugabe erfolgte bis zu einem Gesamtwassergehalt von 17,3 Vol.-%, erstellt. Der Rest 66,8 Vol.-% Flussschotter wies eine Korngrößenverteilung, wie im Vergleichsbeispiel 1 angeführt, auf:

Das Mischen erfolgte in einem Freifallmischer 10 Minuten mit 20 Umdrehungen pro Minute. Der Luftporengehalt betrug 5,0 Vol.-%. Das Ausbreitmaß, bestimmt nach ÖNORM B3303, betrug 55,0 cm.

Aus diesem Frischbeton wurden 26 Probekörper, u. zw. Würfel mit einer Kantenlänge 15 x 15 x 15 cm, gefertigt. Die Druckfestigkeit wurde jeweils an drei Prüfkörpern nach 7 Tagen jeweils im arithmetischen Mittel mit 21,7 N/mm² und nach 28 Tagen mit 31,8 N/mm² bestimmt. Nach 28 Tagen Lagerung bei 20°C und 65 % relativer Luftfeuchtigkeit wurden die Würfel in einem mit Erdgas und Sauerstoff befeuerten Ofen jeweils 3 Stunden bei 800°C, 1000°C, 1100°C und 1200°C gelagert und danach der Gewichtsverlust und das Aussehen im noch heißen Zustand ermittelt. Weiters wurde von den Proben, die auf 1200°C erhitzt wurden, der Gewichtsverlust und das Aussehen unmittelbar nach Abkühlung auf Raumtemperatur und nach 24 Stunden ermittelt. Die Druckfestigkeit lag unmittelbar nach der Abkühlung bei rund 5 N/mm² und war nach 24 Stunden als Folge des fortgeschrittenen Zerfalles der Probewürfel nicht mehr messbar.

| Temperatur °C | Gewichtsverlust Gew-% | Aussehen |
|---|---|---|
| 800 | 7,0 | Keine Abplatzungen |
| 1000 | 7,1 | Keine Abplatzungen |
| 1100 | 7,1 | Keine Abplatzungen |
| 1200 | 7,2 | Risse |
| Unmittelbar nach Abkühlung von 1200°C | 9,2 | Risse |
| Nach 24 Stunden | 9,4 | Risse |

Im Folgenden wird der Temperaturverlauf in der Probe gegen die Zeit in einer Tabelle dargestellt. Der Temperaturverlauf in den Würfeln wurde analog zu Vergleichsbeispiel 1 bestimmt und war wie folgt:

| In Minuten | Temperatur in °C | | |
|---|---|---|---|
| | 30 mm | 50 mm | 100 mm |
| 30 | 170 | 130 | 60 |
| 60 | 300 | 240 | 100 |
| 120 | 430 | 360 | 120 |

### Beispiel 3:

Es wurde ein Frischbeton gefertigt mit 1,2 ‰ Polypropylenfasern mit einem mittleren Durchmesser von 16,0 µm und durchschnittlicher Länge von 6,0 mm mit 8,4 Vol.-% Portlandzement (CEM 1 32,5 R - HS C3Afrei) der Firma Lafarge Perlmoser AG, 1,9 Vol.-% Kraftwerksflugasche Heizkraftwerk Mellach, 0,2 Vol.-% Betonverflüssiger, 0,05 Vol.-% Luftporenbildner jeweils der Firma Betontechnik Ges.m.b.H., 16,7 Vol.-% Wasser, 64,6 Vol.-% Flussschotter, der die Korngrößenverteilung, wie im Vergleichsbeispiel 1 angeführt, aufwies.

Das Mischen erfolgte in einem Freifallmischer 10 Minuten mit 20 Umdrehungen pro Minute. Der Luftporengehalt betrug 8,0 Vol.-%. Das Ausbreitmaß, bestimmt nach ÖNORM B3303, betrug 56,0 cm.

Aus diesem Frischbeton wurden 26 Probekörper, u. zw. Würfel mit einer Kantenlänge 15 x 15 x 15 cm, gefertigt. Die Druckfestigkeit wurde jeweils an drei Prüfkörpern nach 7 Tagen jeweils im arithmetischen Mittel mit 20,7 N/mm² und nach 28 Tagen mit 29,9 N/mm² bestimmt. Nach 28 Tagen Lagerung bei 20°C und 65 % relativer Luftfeuchtigkeit wurden die Würfel in einem mit Erdgas und Sauerstoff befeuerten Ofen jeweils 3 Stunden bei 800°C, 1000°C, 1100°C und 1200°C gelagert und danach der Gewichtsverlust und das Aussehen im noch heißen Zustand ermittelt. Weiters wurde von den Proben, die auf 1200°C erhitzt wurden, der Gewichtsverlust und das Aussehen unmittelbar nach Abkühlung auf Raumtemperatur und nach 24 Stunden ermittelt. Die Druckfestigkeit lag unmittelbar nach der Abkühlung bei rund 5 N/mm² und war nach 24 Stunden als Folge des fortgeschrittenen Zerfalles der Probewürfel nicht mehr messbar.

| Temperatur °C | Gewichtsverlust Gew-% | Aussehen |
|---|---|---|
| 800 | 7,2 | Keine Abplatzungen |
| 1000 | 7,2 | Keine Abplatzungen |
| 1100 | 7,1 | Keine Abplatzungen |
| 1200 | 7,3 | Risse |
| Unmittelbar nach Abkühlung von 1200°C | 9,4 | Risse |
| Nach 24 Stunden | 9,6 | Risse |

Im Folgenden wird der Temperaturverlauf in der Probe gegen die Zeit in einer Tabelle dargestellt. Der Temperaturverlauf in den Würfeln wurde analog zu Vergleichsbeispiel 1 bestimmt und war wie folgt:

| In Minuten | Temperatur in °C | | |
|---|---|---|---|
| | 30 mm | 50 mm | 100 mm |
| 30 | 160 | 120 | 60 |
| 60 | 280 | 240 | 80 |
| 120 | 410 | 340 | 100 |

Die Betone des Vergleichsbeispiels 1 und die der Beispiele 2 und 3 wurden im Wesentlichen mit den gleichen Stoffen aufgebaut, so dass eine gute Vergleichbarkeit gegeben ist. Der Luftporengehalt wurde, da eine volumsmäßige Zusammensetzung angegeben ist, bereits bei der Rezeptur berücksichtigt. Völlig überraschend wiesen die Betone gemäß Beispiel 2 und 3 nur eine unwesentlich geringere Festigkeit auf als die des Vergleichsbeispiels 1. Nimmt man als Maß für die Temperaturbeständigkeit eines Betons die Temperaturen zwischen 800°C und 1200°C, so erweist sich, dass ein Normalbeton gemäß Vergleichsbeispiel 1 einen um ca. 10 % bis 100 % größeren Gewichtsverlust aufweist, und die erfindungsgemäße Betone auch bei dieser Temperatur keine oder nur geringfügige Abplatzungen aufweisen. Der erfindungsgemäße Beton gemäß Beispiel 2 weist einen geringeren Gewichtsverlust als der Vergleichsbeton auf. Der Unterschied zwischen dem erfindungsgemäßen Beton und dem Vergleichsbeispiel 1 liegt bereits bei 1000°C klar vor, da die erfindungsgemäßen Betone lediglich einen Gewichtsverlust von ca. 7,2 Gew.-% aufweisen, der Vergleichsbeton einen Gewichtsverlust von 11,2 Gew.-% aufweist und bereits Risse entstanden sind, wohingegen bei den beiden Betonen gemäß Beispiel 2 und 3 keine Abplatzungen auftraten. Dieser Unterschied wird noch signifikanter bei 1100°C, wo der Vergleichsbeton einen Gewichtsverlust von 16,4 Gew.-% und starke Risse aufwies, hingegen die erfindungsgemäßen Betone mit Fasern einen Gewichtsverlust von 7,1 Gew.-% und keine Abplatzungen aufwiesen. Noch signifikanter wird der Unterschied der Betone bei 1200°C. Hier wies der Vergleichsbeton einen Gewichtsverlust von 16,2 Gew.-% und starke Risse auf, wohingegen die erfindungsgemäßen Betone, die Betone mit Fasern, lediglich einen Gewichtsverlust von 7,2 Gew.-% bzw. 7,3 Gew.-% und Risse aufwiesen.

Die oben angeführten Messungen wurden an den heißen Proben durchgeführt. Nach Abkühlung auf Raumtemperatur sind die Unterschiede noch signifikanter, da bei dem Vergleichsbeton ein Gewichtsverlust von 19,4 Gew.-% und starke Risse vorlagen. Bei den Betonen nach den Beispielen 2 und 3 mit Fasern und Poren lag der Gewichtsverlust bei 9,2 Gew.-% bzw. 9,4 Gew.-%, und es lagen Risse vor.

Beim Vergleichsbeton lag nach 24 Stunden ein deutlicher Kalziumhydroxidzerfall vor mit einem Gewichtsverlust von 22,2 Gew.-%. Die Betone mit Fasern und Luftporen wiesen lediglich einen Gewichtsverlust von 9,4 Gew.-% bzw. 9,6 Gew.-% und Risse auf.

Einen Vergleich des Temperaturverlaufes in den Probewürfeln zeigt signifikante geringere Temperaturerhöhungen bei den erfindungsgemäßen Betonen gegenüber dem Vergleichsbeton und dies sehr wohl in allen drei bestimmten Abständen von der befeuerten Oberfläche und auch gemessen nach 30, 60 und 120 Minuten. Die geringsten Temperaturerhöhungen wurden der Betonzusammensetzung gemäß Beispiel 3 erhalten, u. zw. einer Mischung, die sowohl Luft als auch Fasern enthält, so dass die geringsten Überdeckungen der Armierungen bei dieser Betonzusammensetzung erforderlich sind.

Bei allen in den erfindungsgemäßen Beispielen angeführten Betonzusammensetzungen lag keine Entmischung vor, und wie aus den Beispielen hervorgeht, kann durch die Mischzeit der Luftporengehalt festgelegt werden, womit eine vorbestimmte Qualität, u. zw. auch mit dem Luftporengehalt, erhalten werden kann. Weiters sind Mischer mit einer drehbaren Trommel, z. B. fahrbaren Umkehr-, Gleichlauf- und Freifallmischer, besonders geeignet.

Die erfindungsgemäßen Frischbetone eignen sich auch als Transportbeton, so dass der breite konventionelle Einsatz gewährleistet ist. Beim Beton gemäß Vergleichsbeispiel 1 traten Entmischungserscheinungen auf.

Obwohl die Erfindung anhand der Beispiele mit typischen Portlandzementqualitäten erläutert wurden, sind auch andere Zemente, wie z. B. Kalzium-Aluminat-Zemente (CAC), allerdings mit einem W/B-Wert 0,35 bis 0,60 oder Alinitzemente oder andere Spezialzemente mit verschiedenen latenthydraulisch oder eigenschaftsoptimierenden Zusätzen, wie Gesteins- und Schlackenmehle, Silicastaub, mikronisierte Mineralstoffe od. dgl., geeignet.

Obwohl in den Beispielen lediglich Polypropylenfasern angeführt wurden, können auch Fasern aus anderen Stoffen, wie verschiedene Polymere, Polyester, Zellstoff, eingesetzt werden, wenn dieselben sicherstellen, dass Wasserdampf aus dem Inneren des Festbetons austreten kann, so dass kein Druckaufbau im Festbeton erfolgt und eine Zerstörung desselben aufgrund des expandierenden Wassers vermieden werden kann.

## Patentansprüche

1. Frischbeton mit Gasporen mit zumindest 0,5 Vol.-‰ thermisch bis 250°C, insbesondere bis 200°C, umwandelbaren Fasern, 9,0 Vol.-% bis 15,0 Vol.-% Bindemitteln, z. B. Portlandzement, Flugasche, 15,0 Vol.-% bis 22,0 Vol.-% Wasser, 60,0 Vol.-% bis 75,0 Vol.-% Zuschlagsstoffen, z. B. Schotter, Kies, Leichtzuschlagsstoffe, Rest Zusatzstoffe, Zusatzmittel od. dgl., **dadurch gekennzeichnet, dass** die Summe der Gasporen, insbesondere Luftporen, unter Ausschluss der Gasporen der Zuschlagsstoffe von 5,0 Vol.-% bis 10,0 Vol.-%, beträgt und die Fasern einen Anteil von über 0,5 Vol.- %o bis 2,5 Vol.-%, insbesondere 0,9 Vol.- ‰ bis 0,5 Vol.-%, aus einem Kunststoff, insbesondere thermoplastischen Kunststoff, Polyester, einem Polyolefin, Polyethylen, Polypropylen, aufweisen.

2. Frischbeton nach Anspruch 1, **dadurch gekennzeichnet, dass** die Fasern einen maximalen Durchmesser von 5,0 µm bis 40,0 µm aufweisen.

3. Frischbeton nach Anspruch 1 oder 2, **dadurch gekennzeichnet, dass** die Länge der Fasern zwischen dem Hundertfachen bis Tausendfachen des maximalen Durchmessers der Faser beträgt.

4. Festbeton, insbesondere nach einem der Ansprüche 1, 2 oder 3, mit zumindest 0,5 Vol.- ‰ thermisch bis 250°C, insbesondere bis 200°C, umwandelbaren Fasern, 13,0 Vol.-% bis 19,0 Vol.-% verfestigtem Bindemittel, z. B. Portlandzement, Flugasche, 60,0 Vol.-% bis 75,0 Vol.-% Zuschlagsstoffen, z. B. Schotter, Kies, Leichtzuschlagsstoffe, Rest Zusatzstoffe, Zusatzmittel od. dgl., mit Gasporen, **dadurch gekennzeichnet, dass** die Summe von offenen Gasporen, unter Ausschluss der Gasporen der Zuschlagsstoffe und Fasern von 5,0 Vol.-% bis 10,0 Vol.-% beträgt, und die Fasern einen Anteil von über 0,5 Vol.- ‰ bis 2,5 Vol.-%, insbesondere 0,9 Vol.- ‰ bis 0,5 Vol.-%, aus einem Kunststoff, insbesondere thermoplastischen Kunststoff, Polyester, einem Polyolefin, Polyethylen, Polypropylen, aufweisen.

5. Festbeton nach Anspruch 4, **dadurch gekennzeichnet, dass** die Fasern einen maximalen Durchmesser von 5,0 µm bis 40,0 µm aufweisen.

6. Festbeton nach Anspruch 4 oder 5, **dadurch gekennzeichnet, dass** die Länge der Fasern zwischen dem Hundertfachen bis Tausendfachen des maximalen Durchmessers beträgt.

7. Verfahren zur Herstellung eines Frischbetons nach einem der Ansprüche 1 bis 6, wobei eine Mischung mit 9,0 Vol.-% bis 15,0 Vol.-% Bindemittel, z. B. Portlandzement, Flugasche, 15,0 Vol.-% bis 22,0 Vol.-% Wasser, 60,0 Vol.-% bis 75,0 Vol.-% Zuschlagsstoffen, z. B. Schotter, Kies, Leichtzuschlagsstoffe, und Zusatzstoffen, Zusatzmitteln od. dgl., in einem Fahrmischer mit drehbarer Trommel, z. B. fahrbarem Umkehr-, Gleichlauf-, Freifallmischer, gemischt werden, **dadurch gekennzeichnet, dass** eine Mischung mit Fasern, die thermisch bis 250°C, insbesondere bis 200°C, umwandelbar sind, im Fahrmischer bis zu einem Gasporengehalt von 5,0 Vol.-% bis 10,0 Vol.-% unter Ausschluss der Gasporen der Zuschlagsstoffe gemischt werden.

8. Verfahren nach Anspruch 7, **dadurch gekennzeichnet, dass** nach einer vorbestimmten Anzahl von Umdrehungen der Trommel der Mischvorgang beendet wird.

9. Verfahren nach Anspruch 7 oder 8, **dadurch gekennzeichnet, dass** der Gasporengehalt der Mischung mit der Anzahl der Drehungen der drehbaren Trommel vorab bestimmt wird, und das folgende Mischen von einzelnen Frischbetonmengen unter gleichen Bedingungen erfolgt.

10. Verwendung eines Festbetons nach einem der Ansprüche 1 bis 9 für hitzebeständige Bauteile, insbesondere für eine Auskleidung von Tunnel.
